# EUROPEAN PATENT APPLICATION

(11) **EP 4 732 709 A1**
(43) Date of publication of application: **29.04.2026**
(21) Application number: 25211175.2
(22) Date of filing: 24.10.2025
(51) Int. Cl.: A45F 5/02, A44B 11/00, A44B 99/00, A45C 13/10, A44B 17/00, A45F 3/04, E04H 15/64, A45C 13/12

(54) **MULTIDIRECTIONAL SURFACE MOUNT**

(30) Priority: 25.10.2024 US 202463711732 P; 20.10.2025 US 202519363267
(71) Applicant: Illinois Tool Works Inc., Glenview IL 60025 (US)
(72) Inventor: MILLWARD, Eric W., Glenview, 60025 (US); KOLASA, Scott D., Glenview, 60025 (US); PONTAOE, John S., Glenview, 60025 (US)
(74) Representative: HGF

(57) **Abstract**

A surface mount assembly (102) is provided for securing a component (108) having multiple openings (114, 116). The assembly includes a base structure (104) and a back plate (110) to interlock through corresponding features. The base structure defines a mounted surface (130) with a plurality of locking tabs (106) and a centering post (132) extending therefrom. The back plate includes a central hub portion (118), a series of flexible arms (112) extending radially outward, and multiple clip openings (124) each having a defined locking surface (128). During assembly, the centering post of the base structure aligns with an alignment slot (122) in the back plate to ensure positioning. The locking tabs of the base structure pass through the component's openings (114) and engage the locking surfaces of the clip openings, thereby securely retaining the component between the base structure and the back plate.

## Description

### RELATED APPLICATION

The present application claims priority to United States Provisional Patent Application No. 63/711,732, filed October 25, 2024, and entitled "Multidirectional Surface Mount," which is hereby incorporated by reference in its entirety.

### BACKGROUND

In a wide range of industries, including outdoor equipment, tactical gear, protective clothing, luggage, and personal load-bearing systems, it is often necessary to securely attach hardware components such as straps, webbing, buckles, clips, or adjustment mechanisms to flexible fabric panels. These panels may form part of a backpack, vest, pouch, harness, or similar product, and are typically composed of textile materials including woven, non-woven, or laminated fabrics.

A challenge in attaching hardware to such panels lies in the variability of the fabric itself. Fabric panels may vary widely in thickness and stiffness depending on their construction, layering, reinforcement, or padding. For example, certain applications require multi-layer fabrics for ballistic or thermal protection, while others may incorporate foam, mesh, or stiffeners to improve structure or comfort. As a result, hardware mounting systems must accommodate a broad range of material profiles.

Conventional methods of securing hardware to fabric include stitching, riveting, grommeting, or the use of hook-and-loop fasteners (e.g., Velcro^{®}). While effective in many situations, these techniques have notable drawbacks. Sewing and riveting are often permanent or semi-permanent, requiring specialized tooling and preventing convenient removal or repositioning of the hardware. Grommets and eyelets are limited to discrete thickness ranges and may weaken the fabric if improperly installed. Hook-and-loop systems tend to degrade over time and may not provide sufficient mechanical strength under high loads.

Accordingly, there remains a need for a robust, non-permanent mounting solution that allows secure attachment of hardware components to fabric panels of varying thickness, without requiring invasive techniques such as sewing or riveting, and which facilitates quick assembly, disassembly, or repositioning in the field. More particularly, there is a need for a mounting solution that allows for installation in one of multiple directions relative to the surface.

### SUMMARY

The present disclosure generally relates to a two-part multidirectional surface mount. substantially as illustrated by and described in connection with at least one of the figures, as set forth more completely in the claims.

### DRAWINGS

The foregoing and other objects, features, and advantages of the devices, systems, and methods described herein will be apparent from the following description of particular examples thereof, as illustrated in the accompanying figures, where like or similar reference numbers refer to like or similar structures. The figures are not necessarily to scale, emphasis instead being placed upon illustrating the principles of the devices, systems, and methods described herein.
Figure 1a illustrates an isometric assembly view of the multidirectional surface mount system having a component and a surface mount assembly composed of a base structure and a back plate.
Figure 1b illustrates an isometric assembled view of the multidirectional surface mount system with the component omitted for illustrative purposes.
Figure 1c illustrates a first side assembled view of the multidirectional surface mount system, the opposed side being substantially the same.
Figure 1d illustrates a second side assembled view of the multidirectional surface mount system, the opposed side being substantially the same.
Figure 1e illustrates an isometric cross-sectional view of the multidirectional surface mount system taken along cutline A-A (Figure 1b).
Figure 1f illustrates an isometric cross-sectional view of the multidirectional surface mount system taken along cutline B-B (Figure 1b).
Figure 1g illustrates an isometric cross-sectional view of the multidirectional surface mount system taken along cutline C-C (Figure 1b).
Figure 1h illustrates an isometric cross-sectional view of the multidirectional surface mount system taken along cutline D-D (Figure 1b).
Figure 1i illustrates an isometric cross-sectional view of the multidirectional surface mount system taken along cutline E-E (Figure 1b).
Figure 1j illustrates an isometric cross-sectional view of the multidirectional surface mount system taken along cutline F-F (Figure 1b).
Figure 1k illustrates an isometric cross-sectional view of the multidirectional surface mount system taken along cutline G-G (Figure 1c) with the component omitted for illustrative purposes.
Figure 1l illustrates a top plan cross-sectional viewof the multidirectional surface mount system taken along cutline G-G (Figure 1c) with the component omitted for illustrative purposes.
Figure 2a illustrates an isometric topside view of the back plate.
Figure 2b illustrates an isometric underside view of the back plate.
Figure 2c illustrates top plan view of the back plate.
Figure 2d illustrates bottom plan view of the back plate.
Figure 2e illustrates a first side elevation view of the back plate, the opposed side being substantially the same.
Figure 2f illustrates a second side elevation view of the back plate, the opposed side being substantially the same.
Figure 3a illustrates an isometric topside view of the base structure.
Figure 3b illustrates an isometric underside view of the base structure.
Figure 3c illustrates top plan view of the base structure.
Figure 3d illustrates bottom plan view of the base structure.
Figure 3e illustrates a first side elevation view of the base structure, the opposed side being substantially the same.
Figure 3f illustrates a second side elevation view of the base structure, the opposed side being substantially the same.

### DETAILED DESCRIPTION

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Recitation of ranges of values herein are not intended to be limiting, referring instead individually to any and all values falling within and/or including the range, unless otherwise indicated herein, and each separate value within such a range is incorporated into the specification as if it were individually recited herein. In the following description, it is understood that terms such as "first," "second," "top," "bottom," "side," "front," "back," and the like are words of convenience and are not to be construed as limiting terms. For example, while in some examples a first side is located adjacent or near a second side, the terms "first side" and "second side" do not imply any specific order in which the sides are ordered.

The terms "about," "approximately," "substantially," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the disclosure. The use of any and all examples, or exemplary language ("e.g.," "such as," or the like) provided herein, is intended merely to better illuminate the disclosed examples and does not pose a limitation on the scope of the disclosure. The terms "e.g.," and "for example" set off lists of one or more non-limiting examples, instances, or illustrations. No language in the specification should be construed as indicating any unclaimed element as essential to the practice of the disclosed examples.

The term "and/or" means any one or more of the items in the list joined by "and/or." As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y, and z."

In one example, a surface mount assembly for attachment with a component having a plurality of openings comprises: a base structure having a mounted surface defining a plurality of locking tabs and a centering post extending from the mounted surface; and a back plate comprising a central hub portion, a plurality of flexible arms extending radially outward from the central hub portion, and a plurality of clip openings each defining a locking surface, wherein, during assembly, the centering post of the base structure is configured to align with an alignment slot of the back plate, and wherein the locking tabs of the base structure are configured to pass through the openings of the component and engage the locking surfaces of the clip openings to secure the component between the base structure and the back plate.

In some examples, the base structure and the back plate are configured to engage in one of a plurality of angular orientations about a central axis.

In some examples, the plurality of angular orientations is separated by approximately 90 degrees.

In some examples, the flexible arms of the back plate are generally S-shaped along their length.

In some examples, each flexible arm terminates in a locking body defining the clip opening and the locking surface.

In some examples, the locking surface comprises a chamfered or sloped lead-in surface configured to facilitate assembly.

In some examples, the base structure and the back plate are formed of a polymeric material, a composite material, a metal, or a combination thereof.

In some examples, the base structure and the back plate are injection-molded from a polymeric material.

In some examples, the base structure and the back plate are manufactured by additive manufacturing.

In some examples, the component comprises a planar webbing, strap, or sheet.

In some examples, each locking tab includes a resilient stem portion and a projecting ledge configured to snap over the locking surface of the clip opening.

In some examples, the centering post is configured to extend into an alignment slot of the back plate prior to engagement of the locking tabs.

In some examples, the base structure comprises four locking tabs distributed substantially evenly around the centering post.

In another example, a base structure for a surface mount assembly comprises: a mounted surface defining an outer surface and an inner surface; a centering post extending from the inner surface and being generally concentric with a central axis of the base structure; and a plurality of locking tabs distributed circumferentially about the centering post, each locking tab comprising a resilient body and a ledge configured to engage a locking surface of a corresponding clip opening of a back plate; wherein the plurality of locking tabs are configured to flex during engagement with the back plate to establish a snap-fit connection therewith.

In some examples, each locking tab defines a rectangular or arcuate cross-section.

In some examples, the mounted surface further comprises one or more cavities configured to receive complementary alignment features of the back plate.

In some examples, the mounted surface is planar and configured to mount a buckle, fastener, or accessory component.

In yet another example, a method of assembling a surface mount assembly comprises: providing a base structure including a centering post and a plurality of locking tabs; providing a back plate including a plurality of clip openings each having a locking surface and a plurality of flexible arms extending radially from a central hub portion; positioning a component between the base structure and the back plate, the component defining a plurality of openings corresponding to the locking tabs and the centering post; inserting the centering post through a corresponding opening of the component to align the base structure with the back plate; inserting the locking tabs through the openings of the component and into the clip openings of the back plate; and compressing the base structure and the back plate together such that the locking tabs engage the locking surfaces to secure the component therebetween.

In some examples, the method further comprises rotating the base structure relative to the back plate about a central axis prior to full engagement of the locking tabs.

In some examples, compressing the base structure and the back plate together causes the flexible arms of the back plate to flex and subsequently return to a locked position.

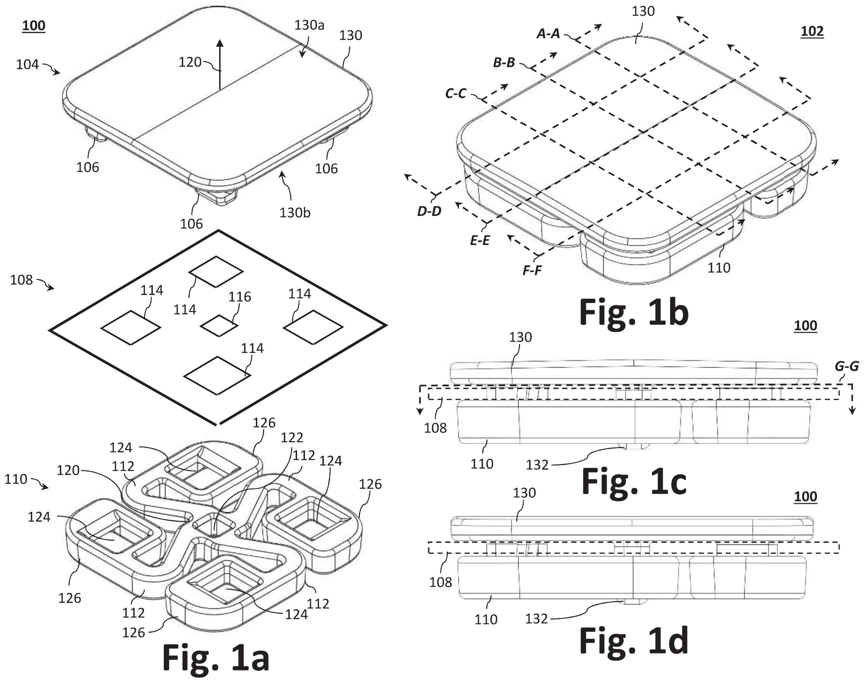

Figures 1a through 1l illustrate various views of a multidirectional surface mount system 100. Figure 1a illustrates an isometric exploded view of the multidirectional surface mount system 100, which includes a component 108 and a surface mount assembly 102. The surface mount assembly 102 comprises a base structure 104 and a back plate 110. Figure 1b presents an isometric assembled view of the system 100 with the component 108 omitted for clarity, thereby better revealing the interaction between the base structure 104 and the back plate 110. Figures 1c and 1d depict first and second side assembled views, respectively, of the surface mount system 100, wherein each opposed side is substantially similar to the illustrated side.

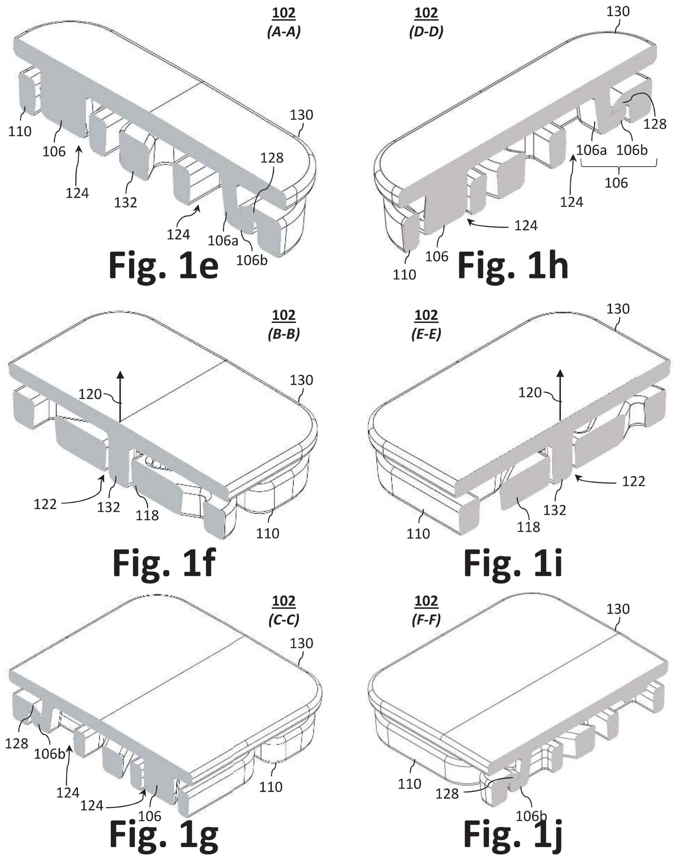

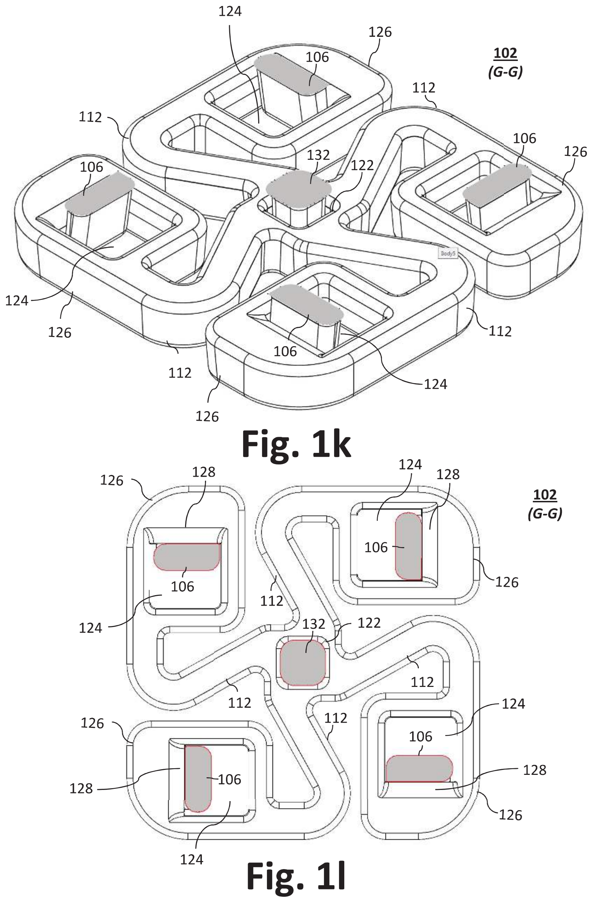

Figures 1e through 1j illustrate isometric cross-sectional views of the surface mount system 100, taken along various cutlines identified in Figure 1b. Specifically, Figure 1e is taken along cutline A-A, Figure 1f along cutline B-B, Figure 1g along cutline C-C, Figure 1h along cutline D-D, Figure 1i along cutline E-E, and Figure 1j along cutline F-F. These sectional views show the internal features and spatial relationships between the base structure 104, back plate 110, and component 108, such as a fabric panel or other planar sheet. Figures 1k and 1l further show cross-sectional views taken along cutline G-G in Figure 1c, again with the component 108 omitted for clarity. Figure 1k illustrates an isometric cross-sectional view, and Figure 1l illustrates a top plan view of the same cross-section.

As shown, the surface mount assembly 102 includes the base structure 104 configured to attach to the back plate 110 via one or more snap-fit joints. Each snap-fit joint includes a locking tab 106 and a corresponding locking surface 128. The locking surface 128 may include a lead-in chamfer or slope that facilitates engagement. During assembly, the locking tabs 106 are pushed against the locking surfaces 128, causing a plurality of flexible arms 112 of the back plate 110 to elastically deform, allowing the components to snap together.

The surface mount assembly 102 is configured to secure a component 108. When assembled, the component 108 is sandwiched between the base structure 104 and the back plate 110.

The component 108 may be or include a planar sheet, such as a webbing, strap, ribbon, textile, or similar flexible structure. The component 108 defines a plurality of openings 114 and openings 116. Each opening 114 is sized and shaped to receive a corresponding locking tab 106, while the opening 116 is sized to receive a centering post 132 of the base structure 104. The pattern of openings 114 and 116 corresponds to the pattern of locking tabs 106 and centering post 132 of the base structure 104.

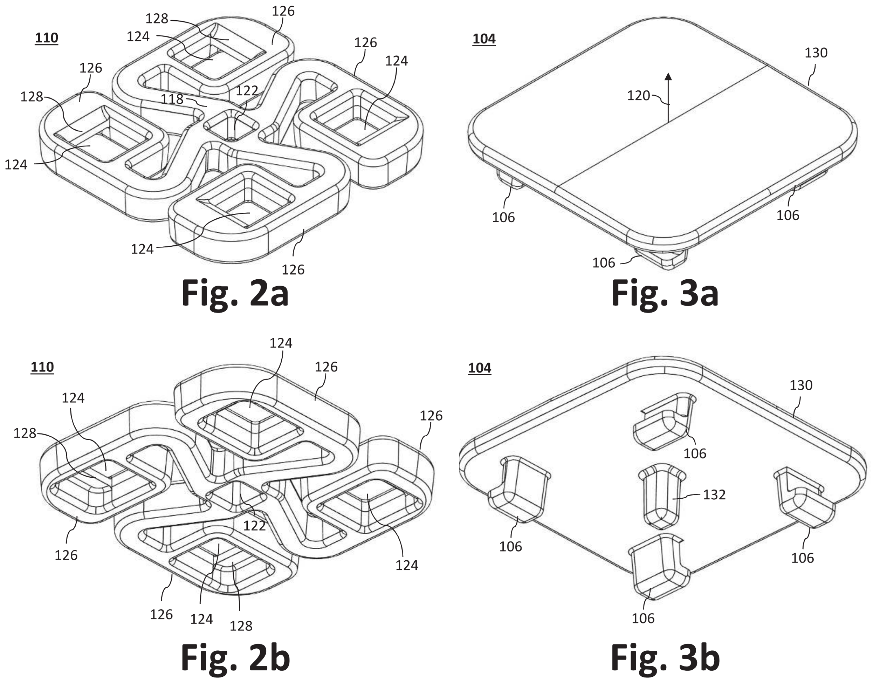

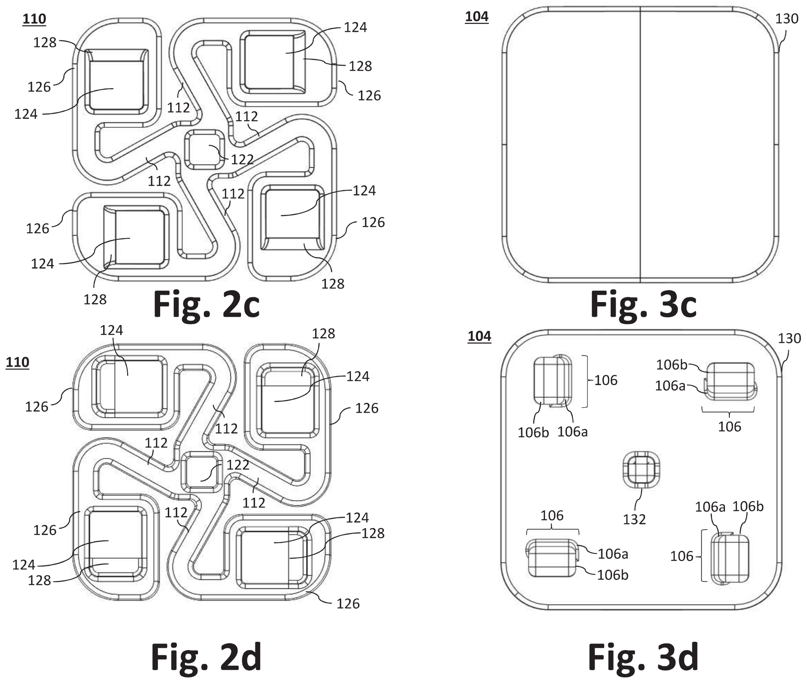

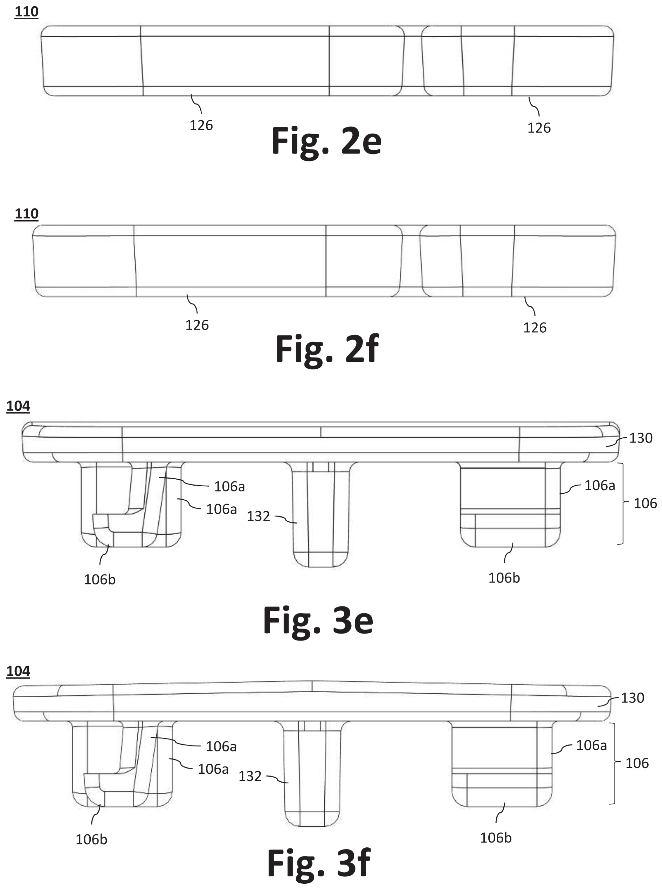

Figures 2a through 2f illustrate various views of the back plate 110. Figure 2a shows an isometric top-side view, and Figure 2b shows the isometric underside. Figures 2c and 2d provide top and bottom plan views, respectively. Figures 2e and 2f depict first and second side elevation views, wherein each opposed side is substantially identical to the other. These views highlight the geometry, alignment features, and overall structural configuration of the back plate 110 that allow it to cooperate with the base structure 104 and securely interface with the component 108.

The back plate 110 includes a plurality of flexible arms 112 extending radially outward from a central hub portion 118. The flexible arms 112 are configured to flex to allow the locking tabs 106 of the base structure 104 to pass through and engage the corresponding locking surfaces 128 formed within or adjacent to clip openings 124. In the illustrated embodiment, the back plate 110 includes four flexible arms 112, though more or fewer arms may be provided to adjust the number of installation positions, which may correspond to the number of locking tabs 106 and clip openings 124.

Each flexible arm 112 is illustrated as having a generally S-shaped (sigmoidal) curvature along its length, although other profiles may be used, including linear, V-shaped, or Z-shaped configurations. The cross-section of each flexible arm 112 along its length is generally quadrilateral, shown here as approximately square with rounded corners.

A locking body 126 is positioned at the distal end of each flexible arm 112. Each locking body 126 defines a clip opening 124 and a locking surface 128 along an inner surface. Each clip opening 124 may have a quadrilateral shape, with one side forming the locking surface 128. The locking surface 128 may be sloped or chamfered to facilitate engagement during assembly.

The central hub portion 118 of the back plate 110 further defines an alignment slot 122. The alignment slot 122 is configured to receive a portion of the base structure 104, such as the centering post 132, to assist in alignment of the two parts during assembly. The cooperation between the alignment slot 122 and centering post 132 allows the base structure 104 and the back plate 110 to translate toward one another along a center axis 120 prior to engagement of the snap-fit joints, thereby allowing for proper orientation and multi-positional assembly.

Figures 3a through 3f illustrate various views of the base structure 104, including isometric, plan, and elevation views. The base structure 104 is configured to receive and retain the back plate 110 while providing a secure multidirectional mounting interface to the component 108.

The base structure 104 is attachable to the back plate 110 in multiple rotational positions about the center axis 120, allowing the orientation of any attached feature (e.g., buckle, fastener, accessory mount, etc.) to be selectively adjusted. In the illustrated embodiment, the base structure 104 can engage the back plate 110 in one of four discrete positions, spaced approximately 90 degrees apart. However, other configurations (e.g., three-, five-, or six-position assemblies) are possible by varying the number of locking tabs 106 and clip openings 124.

The base structure 104 defines a mounted surface 130 having an outer (first) surface 130a and an inner (second) surface 130b. The first surface 130a may be generally planar and may serve as the mounting interface for an attached component, such as a buckle housing, fastener body, or accessory plate. The geometry of the first surface 130a may be adapted as necessary for integration into various end-use products.

The second surface 130b includes the centering post 132 and a plurality of locking tabs 106 extending generally perpendicularly from the surface. The centering post 132 is disposed concentrically about the center axis 120, while the locking tabs 106 are distributed evenly around the centering post 132.

Each locking tab 106 includes a resilient body 106a connected to the second surface 130b and a ledge 106b configured to snap-fit against the locking surface 128 of a corresponding clip opening 124. Although the illustrated locking tabs 106 have clip-type geometries, other configurations such as pegs, barbs, snaps, clasps, or latches may be used.

In the illustrated embodiment, as best illustrated in Figures 3b and 3d, the four locking tabs 106 are arranged approximately 90 degrees apart around a central axis, thereby defining a substantially square pattern. Each of the four locking tabs 106 is oriented in a distinct direction (namely, upward, downward, leftward, and rightward), such that adjacent tabs are oriented approximately 90 degrees relative to one another. In addition to allowing for installation in one of multiple orientations, the orthogonal orientation distributes engagement forces evenly and helps resist rotational or lateral slippage of the back plate 110 relative to the surface mount assembly 102 when external loads are applied. Alternative arrangements are also contemplated, such as triangular (three locking tabs 106) or pentagonal (five locking tabs 106) configurations, allowing for different numbers of indexed rotational positions.

The mounted surface 130 may also include one or more cavities configured to receive complementary features of the back plate 110, in addition to the centering post 132 and alignment slot 122. The precise geometry of these features may vary depending on design requirements.

During assembly, the base structure 104, component 108, and back plate 110 are aligned such that the centering post 132 passes through the opening 116 and the locking tabs 106 pass through the openings 114. The centering post 132 may initially engage the alignment slot 122 to facilitate proper alignment and allow the base structure 104 to translate linearly along the center axis 120 to bring the base structure 104 and the back plate 110 closer together. Once aligned, the components are pressed together, causing the flexible arms 112 to flex outward until the locking tabs 106 snap into engagement with the locking surfaces 128. The component 108 is thereby securely clamped between the collar portion of the base structure 104 and the back plate 110.

The base structure 104 and back plate 110 may be made from plastic, metal, composite, or combinations thereof. In one example, the base structure 104 is formed as a single, integrally molded piece of injection-molded polymer. Suitable materials include acrylonitrile butadiene styrene (ABS), polyvinyl chloride (PVC), nylon, or other engineering plastics.

Both the base structure 104 and back plate 110 may be manufactured using a variety of techniques, including injection molding, CNC machining, or additive manufacturing. In certain embodiments, the parts are produced via 3D printing techniques such as fused deposition modeling (FDM), stereolithography (SLA), or selective laser sintering (SLS), which allow for tight tolerances and complex geometries.

Additive manufacturing can eliminate the need for mold tooling and thereby reduce upfront production costs, particularly advantageous for low-volume production runs or prototype development.

While the present device and/or system have been described with reference to certain examples, it will be understood by those skilled in the art that various changes may be made and equivalents may be substituted without departing from the scope of the present device and/or system. In addition, many modifications may be made to adapt a particular situation or material to the teachings of the present disclosure without departing from its scope. For example, components of disclosed examples may be combined, divided, re-arranged, and/or otherwise modified. Therefore, the present device and/or system are not limited to the particular examples disclosed. Instead, the present device and/or system will include all examples falling within the scope of the appended claims, both literally and under the doctrine of equivalents. Certain embodiments of the invention are described in the following clauses:
Clause 1. A surface mount assembly for attachment with a component having a plurality of openings, the surface mount assembly comprising:
   a base structure having a mounted surface defining a plurality of locking tabs and a centering post extending from the mounted surface; and
   a back plate comprising a central hub portion, a plurality of flexible arms extending radially outward from the central hub portion, and a plurality of clip openings each defining a locking surface,
   wherein, during assembly, the centering post of the base structure is configured to align with an alignment slot of the back plate, and
   wherein the locking tabs of the base structure are configured to pass through the openings of the component and engage the locking surfaces of the clip openings to secure the component between the base structure and the back plate.
Clause 2. The surface mount assembly of clause 1, wherein the base structure and the back plate are configured to engage in one of a plurality of angular orientations about a central axis.
Clause 3. The surface mount assembly of clause 2, wherein the plurality of angular orientations is separated by approximately 90 degrees.
Clause 4. The surface mount assembly of clause 1, wherein the flexible arms of the back plate are generally S-shaped along their length.
Clause 5. The surface mount assembly of clause 1, wherein each flexible arm terminates in a locking body defining the clip opening and the locking surface.
Clause 6. The surface mount assembly of clause 1, wherein the locking surface comprises a chamfered or sloped lead-in surface configured to facilitate assembly.
Clause 7. The surface mount assembly of clause 1, wherein the base structure and the back plate are formed of a polymeric material, a composite material, a metal, or a combination thereof.
Clause 8. The surface mount assembly of clause 7, wherein the base structure and the back plate are injection-molded from a polymeric material.
Clause 9. The surface mount assembly of clause 7, wherein the base structure and the back plate are manufactured by additive manufacturing.
Clause 10. The surface mount assembly of clause 1, wherein the component comprises a planar webbing, strap, or sheet.
Clause 11. The surface mount assembly of clause 1, wherein each locking tab includes a resilient stem portion and a projecting ledge configured to snap over the locking surface of the clip opening.
Clause 12. The surface mount assembly of clause 1, wherein the centering post is configured to extend into an alignment slot of the back plate prior to engagement of the locking tabs.
Clause 13. The surface mount assembly of clause 1, wherein the base structure comprises four locking tabs distributed substantially evenly around the centering post.
Clause 14. A base structure for a surface mount assembly, the base structure comprising:
   a mounted surface defining an outer surface and an inner surface;
   a centering post extending from the inner surface and being generally concentric with a central axis of the base structure; and
   a plurality of locking tabs distributed circumferentially about the centering post, each locking tab comprising a resilient body and a ledge configured to engage a locking surface of a corresponding clip opening of a back plate;
   wherein the plurality of locking tabs is configured to flex during engagement with the back plate to establish a snap-fit connection therewith.
Clause 15. The base structure of clause 14, wherein each locking tab defines a rectangular or arcuate cross-section.
Clause 16. The base structure of clause 14, wherein the mounted surface further comprises one or more cavities configured to receive complementary alignment features of the back plate.
Clause 17. The base structure of clause 15, wherein the mounted surface is planar and configured to mount a buckle, fastener, or accessory component.
Clause 18. A method of assembling a surface mount assembly, comprising:
   providing a base structure including a centering post and a plurality of locking tabs;
   providing a back plate including a plurality of clip openings each having a locking surface and a plurality of flexible arms extending radially from a central hub portion;
   positioning a component between the base structure and the back plate, the component defining a plurality of openings corresponding to the locking tabs and the centering post;
   inserting the centering post through a corresponding opening of the component to align the base structure with the back plate;
   inserting the locking tabs through the openings of the component and into the clip openings of the back plate; and
   compressing the base structure and the back plate together such that the locking tabs engage the locking surfaces to secure the component therebetween.
Clause 19. The method of clause 18, further comprising rotating the base structure relative to the back plate about a central axis prior to full engagement of the locking tabs.
Clause 20. The method of clause 19, wherein compressing the base structure and the back plate together causes the flexible arms of the back plate to flex and subsequently return to a locked position.

## Claims

1. A surface mount assembly for attachment with a component having a plurality of openings, the surface mount assembly comprising:
a base structure having a mounted surface defining a plurality of locking tabs and a centering post extending from the mounted surface; and
a back plate comprising a central hub portion, a plurality of flexible arms extending radially outward from the central hub portion, and a plurality of clip openings each defining a locking surface,
wherein, during assembly, the centering post of the base structure is configured to align with an alignment slot of the back plate, and
wherein the locking tabs of the base structure are configured to pass through the openings of the component and engage the locking surfaces of the clip openings to secure the component between the base structure and the back plate.

2. The surface mount assembly of claim 1, wherein the base structure and the back plate are configured to engage in one of a plurality of angular orientations about a central axis, and optionally
wherein the plurality of angular orientations is separated by approximately 90 degrees.

3. The surface mount assembly of claim 1 or claim 2, wherein the flexible arms of the back plate are generally S-shaped along their length.

4. The surface mount assembly of any one of claims 1 to 3, wherein each flexible arm terminates in a locking body defining the clip opening and the locking surface, and/or
wherein the locking surface comprises a chamfered or sloped lead-in surface configured to facilitate assembly.

5. The surface mount assembly of any one of claims 1 to 4, wherein the base structure and the back plate are formed of a polymeric material, a composite material, a metal, or a combination thereof.

6. The surface mount assembly of any one of claims 1 to 5, wherein the base structure and the back plate are injection-molded from a polymeric material, or
wherein the base structure and the back plate are manufactured by additive manufacturing.

7. The surface mount assembly of any one of claims 1 to 6, wherein the component comprises a planar webbing, strap, or sheet.

8. The surface mount assembly of any one of claims 1 to 7, wherein each locking tab includes a resilient stem portion and a projecting ledge configured to snap over the locking surface of the clip opening.

9. The surface mount assembly of any one of claims 1 to 8, wherein the centering post is configured to extend into an alignment slot of the back plate prior to engagement of the locking tabs, and/or
wherein the base structure comprises four locking tabs distributed substantially evenly around the centering post.

10. A base structure for a surface mount assembly, the base structure comprising:
a mounted surface defining an outer surface and an inner surface;
a centering post extending from the inner surface and being generally concentric with a central axis of the base structure; and
a plurality of locking tabs distributed circumferentially about the centering post, each locking tab comprising a resilient body and a ledge configured to engage a locking surface of a corresponding clip opening of a back plate;
wherein the plurality of locking tabs is configured to flex during engagement with the back plate to establish a snap-fit connection therewith.

11. The base structure of claim 10, wherein each locking tab defines a rectangular or arcuate cross-section.

12. The base structure of claim 10 or claim 11, wherein the mounted surface further comprises one or more cavities configured to receive complementary alignment features of the back plate.

13. The base structure of any one of claims 10 to 12, wherein the mounted surface is planar and configured to mount a buckle, fastener, or accessory component.

14. A method of assembling a surface mount assembly, comprising:
providing a base structure including a centering post and a plurality of locking tabs;
providing a back plate including a plurality of clip openings each having a locking surface and a plurality of flexible arms extending radially from a central hub portion;
positioning a component between the base structure and the back plate, the component defining a plurality of openings corresponding to the locking tabs and the centering post;
inserting the centering post through a corresponding opening of the component to align the base structure with the back plate;
inserting the locking tabs through the openings of the component and into the clip openings of the back plate; and
compressing the base structure and the back plate together such that the locking tabs engage the locking surfaces to secure the component therebetween.

15. The method of claim 14, further comprising rotating the base structure relative to the back plate about a central axis prior to full engagement of the locking tabs, and/or
wherein compressing the base structure and the back plate together causes the flexible arms of the back plate to flex and subsequently return to a locked position.
